# EUROPÄISCHE PATENTANMELDUNG

(11) **EP 2 730 475 A2**
(43) Veröffentlichungstag der Anmeldung: **14.05.2014**
(21) Anmeldenummer: 13186805.1
(22) Anmeldetag: 01.10.2013
(51) Int. Cl.: B60T 10/02, F16D 57/00

(54) **Verfahren zur Steuerung der Bremsleistung eines hydrodynamischen Retarders**

(30) Priorität: 08.11.2012 DE 102012220364
(71) Anmelder: ZF Friedrichshafen AG, 88038 Friedrichshafen (DE)
(72) Erfinder: Schmidtner, Peter, 88131 Lindau (DE); Fleischer, Siegibert, 88410 Bad Wurzach (DE); Bruegel, Benjamin, 88090 Immenstaad (DE); Rick, Jürgen, 88677 Markdorf (DE); Ulmer, Andreas, 88074 Meckenbeuren (DE)

(57) **Zusammenfassung**

Die Erfindung betrifft ein Verfahren zur Steuerung der Bremsleistung eines hydrodynamischen Retarders, bei dem zum Schutz des Retarders und/oder eines Arbeitsmediums des Retarders vor Überhitzung eine Rückregelung der Bremsleistung (P_Ret) des Retarders erfolgt. Um den Betriebskomfort und die Betriebssicherheit zu verbessern ist vorgesehen, dass die Rückregelung der Bremsleistung (P_Ret) des Retarders in Abhängigkeit von der Temperatur (T_Öl) des Arbeitsmediums des Retarders und in Abhängigkeit von dem zeitlichen Temperaturgradienten (dT_Öl/dt) des Arbeitsmediums des Retarders erfolgt.

## Beschreibung

Die Erfindung betrifft ein Verfahren zur Steuerung der Bremsleistung eines hydrodynamischen Retarders gemäß dem Oberbegriff des Patentanspruchs 1.

Hydrodynamische Retarder werden als verschleißfreie Dauerbremseinrichtungen in Nutzfahrzeugen wie Bussen und Lastkraftwagen zur Entlastung der meist als Reibungsbremsen ausgebildeten Rad- bzw. Betriebsbremsen eingesetzt. Ein hydrodynamischer Retarder wirkt als eine Strömungsbremse, bei der die mechanische Energie einer Antriebswelle in die kinetische Energie eines Arbeitsmediums, meistens Öl, umgewandelt wird, wobei eine der gewünschten Bremsleistung entsprechende Ölmenge bei einem bestimmten Druck in einen Retarderraum eingebracht wird. Der Retarder umfasst einen sich im Leistungsfluss eines Antriebsstrangs des Fahrzeugs befindlichen Rotor und einen mit einem Retardergehäuse fest verbundenen Stator. Im Retarderraum nimmt der sich drehende Rotor das Öl mit, das sich an einer Beschaufelung des Stators unter Umwandlung kinetischer Strömungsenergie in Wärme abstützt, wodurch eine Bremswirkung auf den Rotor sowie dessen antreibende Welle und damit eine Abbremsung des gesamten Fahrzeuges erzeugt wird.

In bremsfreien Phasen wird das Arbeitsmedium abgekühlt, wobei im einfachsten Fall das Arbeitsmedium zugleich das Kühlmedium ist. Zur Abkühlung des Arbeitsmediums kann auch ein getrenntes Kühlsystem vorgesehen sein, wobei das Arbeitsmedium zur Wärmeabgabe über einen Wärmetauscher geleitet wird. Die Bauweise der sogenannten Intarder verfügt über einen gemeinsamen Ölhaushalt mit einem Fahrzeuggetriebe, wobei die erzeugte Wärme über einen Kreislauf mit einem Kühlmedium abgeführt wird.

Zum Schutz vor einer Überhitzung des Retarders bzw. seines Arbeitsmediums sind Steuerungen bekannt, die, sobald erforderlich, die Bremsleistung des Retarders und damit dessen Wärmeerzeugung verringern. Allerdings kann die Dynamik einer Rückregelung der Bremsleistung zu kurz aufeinanderfolgenden, wiederholten Ein- und Ausschaltvorgängen des Retarders führen. Ein solches schwingungsartiges Betriebsverhalten kann das Bremsverhalten des Fahrzeugs nachteilig stören.

Aus der EP 1 380 485 B1 ist ein Verfahren zur Begrenzung der Bremswirkung eines Retarders bekannt, bei dem ein Kühlsystem mit einem Kühlmedium eingesetzt wird. Eine Leistungsrückregelung des Retarders erfolgt in Abhängigkeit von der Temperatur des Kühlmediums. Die Leistungsrückregelung beginnt nach dem Erreichen einer vorgegebenen Grenztemperatur des Kühlmediums und verläuft nach verschiedenen vorbestimmten Rückregelkurven oder nach einem Rückregelkennfeld in Abhängigkeit von dem Temperaturgradienten des Kühlmediums. Bei einem schnellen Temperaturanstieg, also bei einem hohen Temperaturgradienten, erfolgt bei Erreichen der Grenztemperatur eine stärkere Begrenzung der Retarderbremswirkung als bei einem langsamen Temperaturanstieg. Die Kühlmediumtemperatur, bei der die Retarderleistung den Wert Null annimmt, also der Retarder abgeschaltet wird, kann abhängig vom Temperaturgradienten des Kühlmediums unterschiedlich sein.

Aus der EP 0 873 925 A2 ist ein Verfahren zur Leistungsrückregelung eines Retarders bekannt, bei dem ein Kühlsystem mit einem Kühlmedium eingesetzt wird, wobei zur Begrenzung der Bremsleistung des Retarders zunächst eine Temperatur des Kühlmediums vorbestimmt wird, bei der die Rückregelung beginnt. Diese Rückregelstarttemperatur des Kühlmediums wird in Abhängigkeit des Temperaturgradienten des Kühlmediums und/oder in Abhängigkeit des Temperaturgradienten eines Arbeitsmediums des Retarders gewählt. Die Rückregelung setzt bei einem steil ansteigenden Temperaturverlauf schon bei niedrigeren Temperaturen des Kühlmediums unterhalb einer Überhitzungsgrenze ein, um ein gefährliches Überschwingen der Kühlmediumtemperatur über die Überhitzungsgrenze zu vermeiden. Bei einem nur langsam ansteigenden Temperaturverlauf hingegen setzt die Rückregelung bei höheren Temperaturen des Kühlmediums unterhalb der Überhitzungsgrenze ein, um das Bremsmoment des Retarders nicht unnötig stark zu reduzieren und Kühlleistung zu verschenken. Dadurch wird die Rückregelung an die Trägheit des Kühlsystems derart angepasst, dass die Kühlleistung des Kühlsystems stets maximal ausgenutzt wird.

Aus der DE 10 2007 048 528 A1 ist ein Verfahren zur Steuerung der Bremsleistung eines Retarders bekannt, bei dem eine Rückregelung als Funktion der Temperatur eines Kühlmediums erfolgt. Eine zulässige Maximaltemperatur des Kühlmediums wird während eines Bremsvorgangs mit einer ermittelten Maximaltemperatur verglichen. Bei einer Temperaturabweichung nach oben wird eine früher einsetzende und/oder stärkere Begrenzung der Bremsleistung bestimmt. Bei einer Temperaturabweichung nach unten wird eine später einsetzende und/oder schwächere Begrenzung der Bremsleistung bestimmt.

Die DE 10 2007 045 370 A1 offenbart ein Verfahren zur Bestimmung der Leistungsfähigkeit eines Kühlsystems eines Kraftfahrzeugs mit einem Retarder. Dazu wird nach einem Bremsvorgang und/oder während des Aufheizens des Kühlsystems vom Retarder vor einer Rückregelung der Bremsleistung der Temperaturgradient des Kühlmediums des Kühlsystems ermittelt und die Leistungsfähigkeit des Kühlsystems nach der Größe des Temperaturgradienten bewertet.

Vor diesem Hintergrund liegt der Erfindung die Aufgabe zugrunde, ein Verfahren zur Steuerung eines hydrodynamischen Retarders anzugeben, das bei einer temperaturbedingten Begrenzung der Bremsleistung des Retarders eine den Betriebskomfort und die Betriebssicherheit verbessernde Rückregelung ermöglicht.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass bei einer Rückregelung der Bremsleistung eines hydrodynamischen Retarders, die aufgrund seiner thermischen Belastung in einem Bremsbetrieb erfolgt, durch eine Berücksichtigung des zeitlichen Verlauf der Temperatur des Arbeitsmediums des Retarders eine Anpassung an alle wesentlichen bekannten Fahrzustände möglich ist, derart, dass ein gleichmäßigeres Bremsverhalten erreicht wird und sprunghafte Regelungsänderungen vermieden werden. Bei der Regelung soll insbesondere auf ein aktives Eingreifen in ein separates Kühlsystem hinsichtlich einer Leistungsregelung des Retarders, soweit ein solches Kühlsystem zur Verfügung steht, verzichtet werden.

Demnach geht die Erfindung aus von einem Verfahren zur Steuerung der Bremsleistung eines hydrodynamischen Retarders, bei dem zum Schutz des Retarders und/oder eines Arbeitsmediums des Retarders vor Überhitzung eine Rückregelung der Bremsleistung des Retarders erfolgt. Zur Lösung der gestellten Aufgabe sieht die Erfindung vor, dass die Rückregelung der Bremsleistung des Retarders in Abhängigkeit von der Temperatur des Arbeitsmediums des Retarders sowie in Abhängigkeit von dem zeitlichen Temperaturgradienten des Arbeitsmediums des Retarders erfolgt.

Unter einem zeitlichen Temperaturgradienten wird die Stärke der Abhängigkeit einer Temperatur von der Zeit verstanden. Die Bezeichnung hydrodynamischer Retarder umfasst alle Bauarten von auf hydrodynamischer Basis arbeitenden Strömungsbremsvorrichtungen, insbesondere auch sogenannte Intarder und Inline-Retarder.

Bei dem Verfahren gemäß der Erfindung wird ein Retarder in Abhängigkeit von der Temperatur und des Temperaturgradienten seines Arbeitsmediums hinsichtlich seiner Bremsleistung geregelt. Diese Regelung erfolgt unabhängig von einem gegebenenfalls vorhandenen Kühlsystem und einer möglichen Regelung dieses Kühlsystems bzw. eines Kühlmediums des Kühlsystems. Insbesondere erfolgt bei dem Verfahren gemäß der Erfindung keine Leistungsregelung bezüglich des Retarders in einem Kühlsystem.

Zur Durchführung des Verfahrens wird der Temperaturgradient des Arbeitsmediums als zusätzliche Variable bei einer auf dem Temperaturzustand des Arbeitsmediums basierenden Bremsleistungsregelung des Retarders eingesetzt. In einer konkretisierten Ausführungsform kann vorgesehen sein, dass die Temperatur des Arbeitsmediums des Retarders erfasst und daraus der Temperaturgradient des Arbeitsmediums ermittelt wird, und dass die Bremsleistung des Retarders innerhalb eines Kennfelds, welches die Bremsleistung über der Temperatur des Arbeitsmediums in Abhängigkeit des Temperaturgradienten des Arbeitsmediums abbildet, in Folge des ermittelten Temperaturgradienten des Arbeitsmediums variiert.

Das Verfahren beruht demnach im Vergleich zu herkömmlichen Verfahren auf einem dreidimensionalen Kennfeld. Zu jedem Zeitpunkt während eines Bremsvorgangs des Retarders kann sich die Bremsleistung innerhalb des Kennfelds verändern, und damit der Rückregelverlauf innerhalb des Kennfelds anhand des Temperaturgradienten des Arbeitsmediums variieren. Dadurch wird eine flexible Bremsleistungsregelung eines hydrodynamischen Retarders erreicht, die bei allen bekannten Fahrzuständen und thermischen Belastungsspitzen ein sprunghaftes Regelverhalten in seinem Verlauf dämpfen kann.

Insbesondere wird durch das Verfahren verhindert, dass ein Retarder bzw. Intarder sich unnötigerweise dicht aufeinanderfolgend wiederholt ein- und ausschaltet sowie sich ein schwingungsartiges Bremsverhalten entwickelt.

Gemäß einer weiteren Konkretisierung des Verfahrens kann vorgesehen sein, dass die Rückregelung der Bremsleistung des Retarders zeitlich abhängig von dem ermittelten Temperaturgradient des Arbeitsmediums erfolgt, wobei ein als hoch bewerteter Temperaturgradient zu einer tendenziell früheren Rückregelung und ein als niedrig bewerteter Temperaturgradient zu einer tendenziell späteren Rückregelung führt.

Weiterhin kann vorgesehen sein, dass die Rückregelung der Bremsleistung des Retarders quantitativ abhängig von dem ermittelten Temperaturgradient des Arbeitsmediums erfolgt, wobei ein als hoch bewerteter Temperaturgradient zu einem tendenziell flacheren Steigungsverlauf und ein als niedrig bewerteter Temperaturgradient zu einem tendenziell steileren Steigungsverlauf einer Regelkurve führt.

Demnach kann bei hohen Temperaturgradienten die Reduzierung der Retarderleistung in Abhängigkeit von der Temperatur seines Arbeitsmediums zwar früher beginnen, aber in ihrem Verlauf vergleichsweise flach abfallen. Bei niedrigen Temperaturgradienten kann die Reduzierung der Retarderleistung in Abhängigkeit von der Temperatur seines Arbeitsmediums hingegen später beginnen und in ihrem Verlauf dann steiler abfallen. Durch diese proaktive, also vorauswirkende Strategie wird einerseits die Gefahr einer Überhitzung, andererseits ein unnötiges wiederholtes Aus- und Einschalten des Retarders vorteilhaft vermieden.

Außerdem kann vorgesehen sein, dass eine Anfangstemperatur, bei der die Rückregelung der Bremsleistung des Retarders beginnt, abhängig von dem ermittelten Temperaturgradient des Arbeitsmediums variiert.

Es kann auch vorgesehen sein, dass eine Abschalttemperatur, bei der die Bremsleistung des Retarders aufgrund der Rückregelung den Wert Null erreicht, abhängig von dem ermittelten Temperaturgradienten des Arbeitsmediums variiert oder für alle ermittelten Temperaturgradienten des Arbeitsmediums gleich oder annähernd gleich ist.

Demnach ist der Temperaturbereich des Arbeitsmediums, innerhalb dessen die Bremsleistungsrückregelung erfolgt, bei dem hier vorgestellten Verfahren flexibel. Beispielsweise kann eine einheitliche Abschalttemperatur für alle Temperaturgradienten vorgegeben werden. Es sind aber auch verschiedene Abschalttemperaturen, abhängig von jeweiligen Temperaturgradienten, möglich. Durch den variablen Rückregelungsbeginn kann insbesondere ein unnötig schnelles Abschalten des Retarders vermieden werden. Eine absolute Anfangstemperatur spielt bei der Rückregelung daher eine eher untergeordnete Bedeutung.

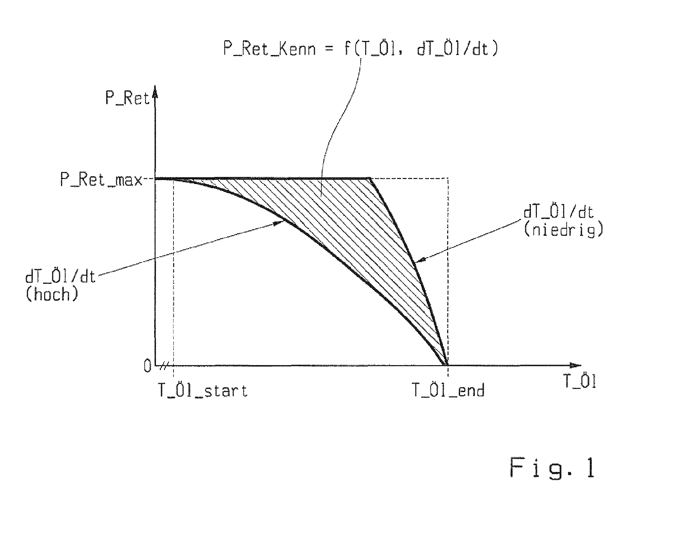

Zur Verdeutlichung der Erfindung ist der Beschreibung eine Zeichnung eines Ausführungsbeispiels beigefügt. In dieser zeigt die einzige Figur ein Kennfeld für eine von der Temperatur des Arbeitsmediums des Retarders abhängige Bremsleistungsregelung eines hydrodynamischen Retarders.

Ein hydrodynamischer Retarder zur Durchführung des Verfahrens kann beispielsweise mit Öl als Arbeitsmedium betrieben sein und als ein Intarder für Nutzfahrzeuge, mit einem gemeinsamen Ölhaushalt mit einem Fahrzeuggetriebe, ausgebildet sein. Der Aufbau und die Funktionsweise eines solchen Intarder sind bekannt. Daher wird hier nur auf das Verfahren zur Leistungsregelung nach der Erfindung näher eingegangen.

Demnach ist in der Figur ein Diagramm dargestellt, in dem die Leistung P_Ret eines hydrodynamischen Retarders über der Öltemperatur T_Öl, also der Temperatur des Arbeitsmediums, aufgetragen ist.

Innerhalb eines Regelbereichs zwischen abgeschaltetem Retarder, also bei P_Ret = 0, und einer maximalen Bremsleistung P_Ret_max sowie zwischen einer Starttemperatur T_Öl_start und einer Endtemperatur T_Öl_end, ist eine Kennlinie der Bremsleistung P_Ret über der Öltemperatur T_Öl dargestellt, die durch einen Öltemperaturgradient dT_Öl/dt, welcher als eine dritte Dimension des Kennfelds fungiert, zu einem Kennfeld P_Ret_Kenn = f (T_Öl, dT_Öl/dt) erweitert ist.

Das Verfahren wird durchgeführt, wenn eine Überhitzung des Retarders und eine vorzeitige Alterung seines Arbeitsmediums bzw. Öls durch einen Anstieg der Öltemperatur T_Öl über die Starttemperatur T_Öl_start des Regelbereichs hinaus drohen. Eine Reduzierung der Bremsleistung P_Ret setzt jedoch nicht unbedingt unmittelbar zu diesem Zeitpunkt bzw. bei der Starttemperatur T_Öl_start ein. Vielmehr kann eine Reduzierung der Bremsleistung P_Ret bei dieser oder einer höheren Öltemperatur T_Öl ≥ T_Öl_start einsetzen. Als Kriterium wird der zeitliche Temperaturgradient dT_Öl/dt herangezogen. Bei einem hohen Temperaturgradient dT_Öl/dt (hoch), also einer starken Änderung der Öltemperatur mit der Zeit, beginnt die Rückregelung der Bremsleistung P_Ret des Retarders früh und mit einem flachen Verlauf, also nahe einer inneren Begrenzung des Kennfelds. Bei einem niedrigen Temperaturgradient dT_Öl/dt (niedrig), also einer schwachen Änderung der Öltemperatur mit der Zeit, beginnt die Rückregelung spät und fällt dann steiler ab, also nahe einer äußeren Begrenzung des Kennfelds, um bei der gleichen Abschalttemperatur T_Öl_end in dem Diagramm die Achse der Bremsleistung P_Ret zu schneiden.

Innerhalb des in der Figur schraffierten Kennfelds kann die Bremsleistung P_Ret anhand des Öltemperaturgradienten dT_Öl/dt frei variieren. Ein Rückregelverlauf der Bremsleistung P_Ret des Retarders kann daher je nach der aktuellen Entwicklung des Öltemperaturgradienten dT_Öl/dt zunächst steiler und dann weniger steil oder umgekehrt verlaufen. In einer Abkühlphase kann auch die maximale Leistung P_Ret_max des Retarders wieder erreicht werden. Eine hohe Temperaturdynamik, bedingt durch den Verlauf der Fahrsituationen des Fahrzeugs, führt jedoch nicht zu schnell folgenden und der momentanen Temperatur T_ÖL entsprechenden großen alternierenden Veränderungen der Bremsleitung P_Ret, bis hin zu einem schnellen Abschalten und bei geringem Temperaturabfall erneutem schnellem Einschalten des Retarders, sondern führt durch eine proaktive Steuerung anhand des zeitlichen Temperaturgradienten zu einer eher kontinuierlichen Regelung sowie in der Folge zu einem komfortableren Bremsverhalten des Fahrzeugs.

Das erläuterte Kennfeld in der Figur ist lediglich als ein Beispiel zu verstehen. Kennfelder mit anderen Verläufen sind ebenfalls möglich. Wesentlich ist die Abhängigkeit der Reglung der Bremsleistung P_Ret des Retarders sowohl von der Temperatur T_Öl als auch vom zeitlichen Verlauf der Temperatur dT_Öl/dt des Arbeitsmediums des Retarders.

### Bezugszeichenliste

- P_Ret: Bremsleistung eines Retarders
- P_Ret_Kenn: Bremsleistungskennfeld, Rückregelkennfeld
- P_Ret_max: Maximale Bremsleistung
- T_Öl: Öltemperatur, Temperatur des Arbeitsmediums
- T_Öl_start: Starttemperatur, Anfangstemperatur
- T_Öl_end: Endtemperatur, Abschalttemperatur
- dT_Öl/dt: Öltemperaturgradient

## Patentansprüche

1. Verfahren zur Steuerung der Bremsleistung eines hydrodynamischen Retarders, bei dem zum Schutz des Retarders und/oder eines Arbeitsmediums des Retarders vor Überhitzung eine Rückregelung der Bremsleistung (P_Ret) des Retarders erfolgt, **dadurch gekennzeichnet, dass** die Rückregelung der Bremsleistung (P_Ret) des Retarders in Abhängigkeit von der Temperatur (T_Öl) des Arbeitsmediums des Retarders und in Abhängigkeit von dem zeitlichen Temperaturgradienten (dT_Öl/dt) des Arbeitsmediums des Retarders erfolgt.

2. Verfahren nach Anspruch 1, **dadurch gekennzeichnet, dass** die Temperatur (T_Öl) des Arbeitsmediums erfasst und daraus der Temperaturgradient (dT_Öl/dt) des Arbeitsmediums ermittelt wird, und dass die Bremsleistung (P_Ret) des Retarders innerhalb eines Kennfelds, welches die Bremsleistung (P_Ret) über der Temperatur (T_Öl) des Arbeitsmediums in Abhängigkeit von dem Temperaturgradienten (dT_Öl/dt) des Arbeitsmediums abbildet, in Folge des ermittelten Temperaturgradienten (dT_Öl/dt) des Arbeitsmediums variiert.

3. Verfahren nach Anspruch 1 oder 2, **dadurch gekennzeichnet, dass** die Rückregelung der Bremsleistung (P_Ret) des Retarders zeitlich abhängig von dem ermittelten Temperaturgradienten (dT_Öl/dt) des Arbeitsmediums erfolgt, wobei ein als hoch bewerteter Temperaturgradient (dT_Öl/dt) zu einer tendenziell früheren Rückregelung und ein als niedrig bewerteter Temperaturgradient (dT_Öl/dt) zu einer tendenziell späteren Rückregelung führt.

4. Verfahren nach einem der Ansprüche 1 bis 3, **dadurch gekennzeichnet, dass** die Rückregelung der Bremsleistung (P_Ret) des Retarders quantitativ abhängig von dem ermittelten Temperaturgradient (dT_Öl/dt) des Arbeitsmediums erfolgt, wobei ein als hoch bewerteter Temperaturgradient (dT_Öl/dt) zu einem tendenziell flacheren Steigungsverlauf und ein als niedrig bewerteter Temperaturgradient (dT_Öl/dt) zu einem tendenziell steileren Steigungsverlauf führt.

5. Verfahren nach einem der Ansprüche 1 bis 4, **dadurch gekennzeichnet, dass** eine Anfangstemperatur (T_Öl_start), bei der die Rückregelung der Bremsleistung (P_Ret) des Retarders beginnt, abhängig von dem ermittelten Temperaturgradienten (dT_Öl/dt) des Arbeitsmediums variiert.

6. Verfahren nach einem der Ansprüche 1 bis 5, **dadurch gekennzeichnet, dass** eine Abschalttemperatur (T_Öl_end), bei der die Bremsleistung (P_Ret) des Retarders aufgrund der Rückregelung den Wert Null erreicht, abhängig von dem ermittelten Temperaturgradienten (dT_Öl/dt) des Arbeitsmediums variiert.

7. Verfahren nach einem der Ansprüche 1 bis 5, **dadurch gekennzeichnet, dass** eine Abschalttemperatur (T_Öl_end), bei der die Bremsleistung (P_Ret) des Retarders aufgrund der Rückregelung den Wert Null erreicht, für alle ermittelten Temperaturgradienten (dT_Öl/dt) des Arbeitsmediums gleich oder annähernd gleich ist.
